# EUROPEAN PATENT APPLICATION

(11) **EP 4 593 355 A1**
(43) Date of publication of application: **30.07.2025**
(21) Application number: 23867422.0
(22) Date of filing: 15.09.2023
(51) Int. Cl.: H04L 65/1016

(54) **COMMUNICATION METHOD, APPARATUS, UE, AND READABLE STORAGE MEDIUM**

(30) Priority: 22.09.2022 CN 202211160869
(71) Applicant: Vivo Mobile Communication Co., Ltd., Dongguan, Guangdong 523863 (CN)
(72) Inventor: CHENG, Sihan, Dongguan, Guangdong 523863 (CN); SUN, Yanliang, Dongguan, Guangdong 523863 (CN); YU, Shijie, Dongguan, Guangdong 523863 (CN); LIU, Hui, Dongguan, Guangdong 523863 (CN)
(74) Representative: Walaski, Jan Filip
(86) International application number: PCT/CN2023/119192
(87) International publication number: WO 2024/061133

(57) **Abstract**

A communication method, an apparatus, a UE, and a readable storage medium. The communication method comprises: after communication of a first multimedia subsystem (IMS) service between a first user equipment (UE) and a second UE is finished, the first UE initiating a session release process when a first condition is met, the session release process being used for releasing a first session, and the first session being used for transmitting the first IMS service; and, after the session release process is completed, initiating a session establishment process and an IMS registration process, the session establishment process being used for establishing a second session, and the second session being used for transmitting a second IMS service.

## Description

### CROSS-REFERENCE TO RELATED APPLICATIONS

This application claims the priority of a Chinese Patent with an application number of 202211160869.3 filed in China on September 22, 2022, the entire content of which is herein incorporated by reference.

### TECHNICAL FIELD

This application belongs to the technical field of communication, and in particular to a communication method, an apparatus, a UE and a readable storage medium.

### BACKGROUND

In the prior art, in a process that a UE1 and a UE 2 perform communication of an Internet Protocol (Internet Protocol, IP) Multimedia Subsystem (IP Multimedia Subsystem, IMS) service (for example, a voice call service or a video call service), a network side device may respectively establish a dedicated bearer, such as a 5G quality of service flow (Quality of Service flow, QoS flow) or a 4G evolved packet system bearer (Evolved Packet System bearer, EPS bearer), used for transmitting the IMS service for the UE1 and the UE2.

In a case that a user of the UE1 or UE2 ends communication of the IMS service, the UE1 or UE2 may send a session initiation protocol (Session Initiation Protocol, SIP) Bye (Bye) message, and the network side device may delete the dedicated bearer used for transmitting the IMS service according to the Bye message sent by the UE.

However, when the UE1 or UE2 ends the communication of the IMS service, in a case that the network side device has an error, and the dedicated bearer used for transmitting the IMS service cannot be successfully deleted, a problem that the dedicated bearer used for transmitting the IMS service cannot be successfully established in a subsequent process when the UE1 or UE2 initiates or receives a request for establishing the IMS service may be caused.

Therefore, the IMS service of the UE1 or UE2 cannot be successfully established, and the user experience may be influenced.

### SUMMARY

Embodiments of this application provide a communication method capable of solving the problem that a user cannot normally use an IMS service communication function because a dedicated bearer used for transmitting an IMS service cannot be deleted.

In a first aspect, a communication method is provided, is applied to a user equipment (UE), and includes: after communication of a first multimedia subsystem (IMS) service between a first UE and a second UE is finished, initiating a session release process by the first UE in a case that a first condition is met, the session release process being used for releasing a first session, and the first session being used for transmitting the first IMS service; and initiating a session establishment process and an IMS registration process after the session release process is completed, the session establishment process being used for establishing a second session, and the second session being used for transmitting a second IMS service.

In a second aspect, a voice communication apparatus is provided, and includes: a processing module. The processing module is configured to initiate a session release process by the first UE after communication of a first IMS service between a first UE and a second UE is finished in a case that a first condition is met, the session release process is used for releasing a first session, and the first session is used for transmitting the first IMS service. The processing module is further configured to initiate a session establishment process and an IMS registration process after the session release process is completed, the session establishment process is used for establishing a second session, and the second session is used for transmitting a second IMS service.

In a third aspect, a terminal is provided. The terminal includes a processor and a memory. The memory stores a program or an instruction capable of running on the processor, and the program or instruction is executed by the processor to implement the steps of the method according to the first aspect.

In a fourth aspect, a terminal is provided, and includes a communication interface. The communication interface is configured to initiate a session release process after communication of a first IMS service between a first UE and a second UE is finished in a case that a first condition is met, the session release process being used for releasing a first session, and the first session being used for transmitting the first IMS service; and initiate a session establishment process and an IMS registration process after the session release process is completed, the session establishment process is used for establishing a second session, and the second session is used for transmitting a second IMS service.

In a fifth aspect, a communication system is provided, and includes: a terminal and a network side device. The terminal may be configured to execute the steps of the communication method according to the first aspect.

In a sixth aspect, a readable storage medium is provided. The readable storage medium stores a program or an instruction executed by a processor to implement the steps of the method according to the first aspect.

In a seventh aspect, a chip is provided. The chip includes a processor and a communication interface, the communication interface is coupled to the processor, and the processor is configured to run a program or an instruction to implement the method according to the first aspect.

In an eighth aspect, a computer program/program product is provided. The computer program/program product is stored in a storage medium, and the computer program/program product is executed by at least one processor to implement the steps of the communication method according to the first aspect.

In embodiments of this application, after communication of the first IMS service between the first UE and the second UE is finished, the first UE initiates the session release process in a case that the first condition is met, the session release process being used for releasing the first session, and the first session being used for transmitting the first IMS service; and initiates the session establishment process and the IMS registration process after the session release process is completed, the session establishment process being used for establishing the second session, and the second session being used for transmitting the second IMS service. Therefore, after the first UE and the second UE end the IMS service, the first session between the first UE and the second UE is released in a case that the first condition is met. Therefore, when the dedicated bearer corresponding to the IMS service is not successfully deleted, the first UE may successfully establish a new session and IMS registration in a next call.

### BRIEF DESCRIPTION OF THE DRAWINGS

FIG. 1 is a schematic diagram of a possible structure of a communication system involved in an embodiment of this application;
FIG. 2 is a schematic flowchart of an IMS service of a communication method according to an embodiment of this application;
FIG. 3 is a schematic flowchart of ending an IMS service of a communication method provided by an embodiment of this application;
FIG. 4 is a schematic flowchart of a communication method provided by an embodiment of this application;
FIG. 5 is another schematic flowchart of a communication method provided by an embodiment of this application;
FIG. 6 is a schematic diagram of a structure of a communication apparatus provided by an embodiment of this application;
FIG. 7 is a schematic diagram of a hardware structure of a communication apparatus provided by an embodiment of this application; and
FIG. 8 is a schematic diagram of a hardware structure of a terminal provided by an embodiment of this application.

### DETAILED DESCRIPTION

The technical solutions in embodiments of this application will be clearly described below with the reference to the accompanying drawings in the embodiments of this application. Apparently, the described embodiments are merely some rather than all of the embodiments of this application. All other embodiments obtained by a person of ordinary skill in the art based on the embodiments of this application shall fall within the protection scope of this application.

The terms such as "first", "second", etc. in the description and claims of this application are used for distinguishing similar objects and not necessarily used for describing the specific order or sequence. It should be understood that used terms in this way may be interchangeable under appropriate circumstances, so that the embodiment of this application may be implemented in a sequence other than those illustrated or described herein. In addition, the objects distinguished by "first" or "second" are generally objects of one type with the unlimited object quantity. For example, a first object may indicate one or more first objects. In addition, "and/or" in the specification and the claims represents at least one of connected objects, and character "/" generally represents an "or" relationship between associated objects before and after. The term "indication" in the specification and claims of this application may be an explicit indication or an implicit indication. The explicit indication may be understood as that a sending party explicitly notifies a receiving party of an operation needing to be performed or a request result in the sent indication. The implicit indication may be understood as that the receiving party judges according to the indication sent by the sending party, and determines an operation needing to be performed or a request result according to a judging result.

It is worth pointing out that the technology described in embodiments of this application is not limited to a long term evolution (Long Term Evolution, LTE) / LTE-advanced (LTE-Advanced, LTE-A) system, and may also be used in other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA) and other systems. The terms "system" and "network" in embodiments of this application are often used interchangeably, and the described technology may be applied to the systems and radio technologies mentioned above, and may also be applied to other systems and radio technologies. The following descriptions describe a new radio (New Radio, NR) system for an illustration purpose, and NR terminology is used in most of the following descriptions, but these technologies may also be applied to applications other than NR system applications, such as 6^{th} (6^{th} Generation, 6G) communication systems.

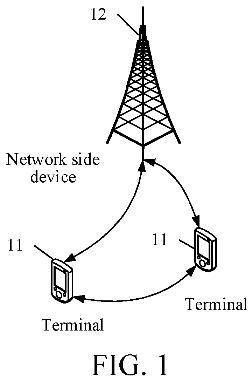

FIG. 1 is a block diagram of an applicable radio communication system according to an embodiment of this application. The radio communication system includes a terminal 11 and a network side device 12. The terminal 11 may be a terminal side device such as a mobile phone, a tablet personal computer (Tablet Personal Computer), a laptop computer (Laptop Computer), or referred to as notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicular user equipment (VUE), a pedestrian user equipment (PUE), a smart home (a home device with a wireless communication function, for example, a refrigerator, a television, a washing machine, or furniture), a games console, a personal computer (personal computer, PC), a teller machine, and a self-service machine. The wearable device includes: a smartwatch, a smart band, a smart headset, smart glasses, smart jewelry (a smart bracelet, a smart chain bracelet, a smart ring, a smart necklace, a smart anklet, a smart ankle chain, etc.), a smart wrist strap, a smart garment, etc. Besides the above terminal devices, the terminal 11 may further be a chip in a terminal, for example, a modem (Modem) chip or a system on chip (System on Chip, SoC). It should be noted that a specific type of the terminal 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point or a WiFi node, etc. The base station may be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a household node B, a household evolution node B, a transmitting receiving point (Transmitting Receiving Point, TRP) or some other appropriate terms in the field provided that the same technical effect is achieved. The base station is not limited to specific technical vocabularies. It is to be noted that in the embodiments of this application, description is performed by only taking a base station in an NR system as an example, and a specific type of the base station is not limited. The core network device may include, but is not limited to, at least one of the followings: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, or L-NEF), a binding support function (Binding Support Function, BSF), an Application Function (Application Function, AF), etc. It should be noted that in embodiments of this application, descriptions are performed by only taking the core network device in the NR system as an example, and a specific type of the core network device is not limited.

In the prior art, in a process that a UE1 and a UE 2 perform communication of an IMS service (for example, a voice call service or a video call service), a network side device may respectively establish a dedicated bearer, such as a 5G QoS flow or a 4G EPS bearer, used for transmitting the IMS service for the UE1 and the UE2. In a case that a user of the UE1 or UE2 ends the communication of the IMS service, the UE1 or UE2 may send an SIP Bye message, and the network side device may delete the dedicated bearer used for transmitting the IMS service according to the Bye message sent by the UE.

A process of establishing the voice communication will be described below by taking the UE-1 being called, the UE-2 calling, and a voice call service as an example. Specifically, the process includes Step 1 to Step 15 as below.

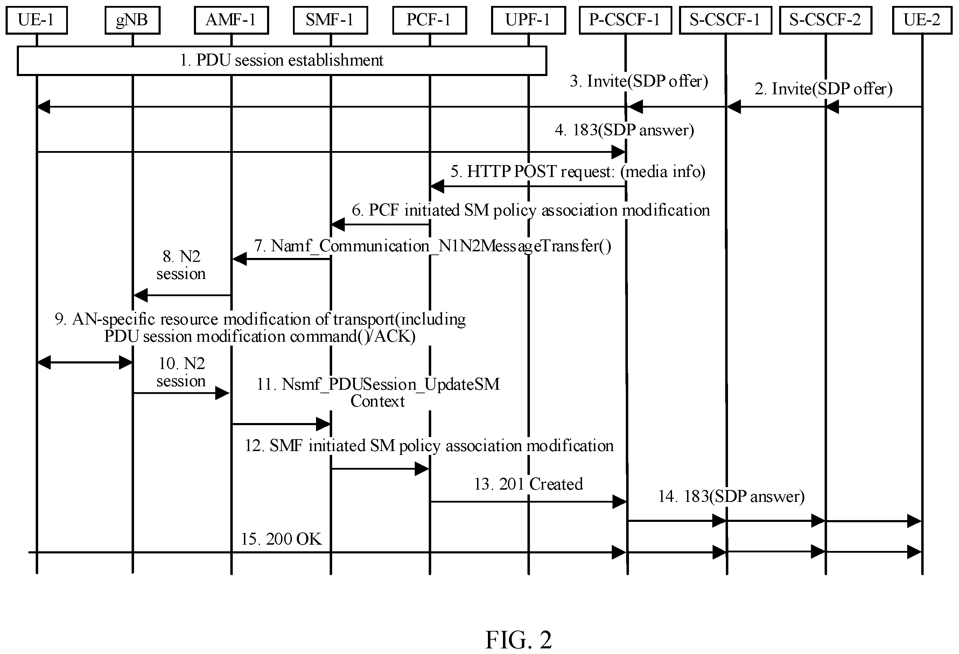

As shown in FIG. 2, a device with an end of -1 in FIG. 2 is a core network device providing a service to the UE-1. A device with an end of -2 in FIG. 2 is a core network device providing a service to the UE-2.

Step 1: The UE-1 establishes a protocol data unit (Protocol Data Unit, PDU) session used for transmitting a multimedia subsystem (IP Multimedia Subsystem, SMS) service.

Optionally, the data network name (Data Network Name, DNN) corresponding to the PDU session is IMS.

Optionally, the PDU session is used for transmitting data and/or signaling of the IMS service.

Step 2: The UE-2 initiates an IMS session establishment request, and initiates the request through an SIP invite (SIP invite) message. Information of to-be-established voice media is carried in a session description protocol (session description protocol, SDP) of the request.

An example of an SDP offer (offer) is as follows:
m=audio 49152 RTP/AVP 97 98
a=rtpmap:97 EVS/16000/1

The request is sent to a proxy call session control function (Proxy call session Control function, P-CSCF) providing services to the UE-1 through a serving call session control function (serving call session Control function, S-CSCFs) providing services to the UE-2 and an S-CSCF providing services to the UE-1.

It should be noted that the P-CSCF providing services to the UE-2 are omitted and not shown in the figures.

Step 3: The P-CSCF-1 sends the invite message to the UE-1.

Step 4: The UE-1 replies to the SIP 183 message, and the message includes an SDP answer (answer).

It should be noted that the SDP offer and the SDP answer are used for negotiating information such as a voice encoding mode used for this call.

Step 5: The P-CSCF sends, to a point coordination function (Point Coordination Function, PCF) providing services for the UE-1, media description information negotiated through the SDP. The media description information is acquired according to an SDP answer message

Step 6: The PCF sends a request to a session management function (Session Management Function, SMF) providing services to the UE-1, to request to establish a dedicated (dedicated) bearer used for transmitting the IMS voice service, and a QoS parameter of the to-be-established dedicated bearer is carried in the request. The bearer may be a QoS flow.

Step 7 to Step 11: The SMF judges that the request is used for establishing the dedicated bearer, and initiates a process of establishing the dedicated bearer, i.e., a QoS flow of a 5G QoS Identifier (5G QoS Identifier, 5QI) = 1.

It should be noted that the 5QI is used for identifying a service level of QoS in the 5G system, and a concept of 4G corresponding to the 5QI is a QoS Class Identifier (QoS Class Identifier, QCl).

Step 12: The SMF sends a confirmation message to the PCF.

Step 13: The PCF sends a confirmation message to the P-CSCF.

Step 14: The P-CSCF determines that the dedicated bearer is established according to the message in Step 13, and sends a 183 message carrying an SDP answer of the UE-1 to the UE-2 through the S-CSCF.

It should be noted that after receiving the SDP answer, the P-CSCF of the UE-2 establishes a dedicated bearer used for transmitting the IMS voice service for the UE-2. The bearer may be a QoS flow.

Step 15: When the user of the UE-1 answers an incoming call, the UE-1 sends 200 OK, and the UE-2 determines that the user of the UE-1 answers the incoming call according to the 200 OK, and starts the call.

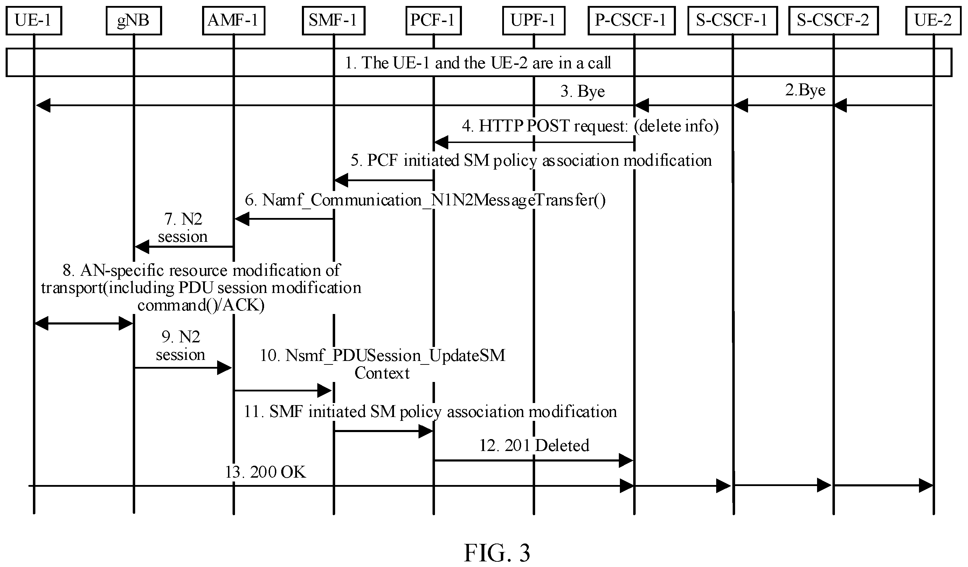

A flow process of deleting the dedicated bearer after a call is hung up is described below by taking the UE-2 hanging up the call as an example. Specifically, the following Step 1 to Step 13 are included as shown in FIG. 3:
Step 1: The UE-1 and the UE-2 have established a voice call.

Step 2: The UE-2 hangs up the call, and the UE-2 sends a Bye message to the UE-1.

Step 3: The P-CSCF-1 sends a Bye message to the UE-1.

Step 4: The P-CSCF-1 sends a deletion command to the PCF-1.

Step 5: The PCF sends a deletion command to the SMF.

Step 6 to Step 10: The SMF initiates a PDU session modification command to delete the voice-specific QoS flow.

Step 11 to step 12: Reply confirmation is performed.

It should be noted that there is no particular sequence in Step 3 and Step 4.

Step 13: The UE-1 sends 200 OK to confirm the Bye message.

Based on the above condition, in a case that the UE-1 or UE-2 hangs up the call, the network has an error, and the dedicated bearer deletion is not completed. For example, in FIG. 3, a problem occurring in any one of Step 4 to Step 12 may cause a dedicated bearer deletion failure. The network side device may establish a dedicated bearer for one voice service only for the UE, therefore, when the UE-1 subsequently initiates or receives a voice call, the network side device may reject establishing a dedicated bearer for the UE-1 again. The UE-1 may not make or receive a call, and the user experience may be influenced.

For example, in FIG. 2, after the P-CSCF-1 receives the SDP answer, Step 5 is sent to the PCF, and a message of rejecting establishing the dedicated bearer sent by the PCF may be received. The P-CSCF-1 sends a Cancel (Cancel) message to the UE-1. The Cancel message is used for canceling a call request sent in Step 3. It should be noted that a cause value may be carried in the Cancel message: an insufficient bearer resource (insufficient bearer resource). Then, the SMF-1 may further initiate a PDU session modification command (PDU session modification command) to the UE for deleting a request of a voice dedicated bearer. However, due to an error at a network side, the deletion process cannot be normally completed. Or, the UE-1 may further initiate a request for deleting the voice dedicated bearer, but the deletion process cannot be normally completed due to an error at the network side. Finally, when the UE-1 initiates or receives the voice call, the network side device may reject establishing the voice dedicated bearer for the UE-1 again, so that the UE-1 cannot perform normal communication.

However, in embodiments of this application, after the communication (for example, voice communication) of the first IMS service between the first UE and the second UE is finished, the first UE initiates a session release process in a case that a first condition is met, the session release process being used for releasing the first session, and the first session being used for transmitting the first IMS service; and initiates a session establishment process and an IMS registration process after the session release process is completed, the session establishment process being used for establishing a second session, and the second session being used for transmitting a second IMS service. Therefore, after the first UE and the second UE end the IMS service, the first session between the first UE and the second UE is released in a case that the first condition is met. Therefore, when the dedicated bearer corresponding to the IMS service is not successfully deleted, the first UE may successfully establish a new session and IMS registration in a next call.

Optionally, that the first session being used for transmitting the first IMS service may be understood as that: the first session is used for transmitting data and/or signaling of the first IMS service; or, the first session corresponds to the IMS service. By taking the voice service as an example, the first session is used for transmitting data and/or signaling of the voice service.

Optionally, that the second session being used for transmitting the second IMS service may be understood as that: the second session is used for transmitting data and/or signaling of the second IMS service; or, the second session corresponds to the IMS service. By taking the voice service as an example, the second session is used for transmitting data and/or signaling of the voice service.

Optionally, the call of the first IMS service of the first UE and the second UE being finished may be understood as that: the IMS session (session) corresponding to the first IMS service is finished; or, the call corresponding to the first IMS service of the first UE and the second UE is finished. By taking the voice service as an example, the call of the first IMS service of the first UE and the second UE being finished may be understood as that the voice call of the first UE and the second UE is finished.

Detailed illustration about the communication method, the apparatus, the terminal and the readable storage medium provided by embodiments of this application will be provided below through some embodiments and application scenarios in combination with accompanying drawings.

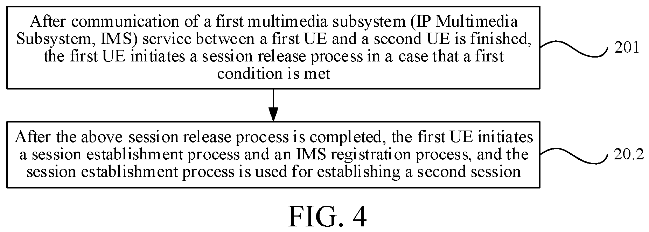

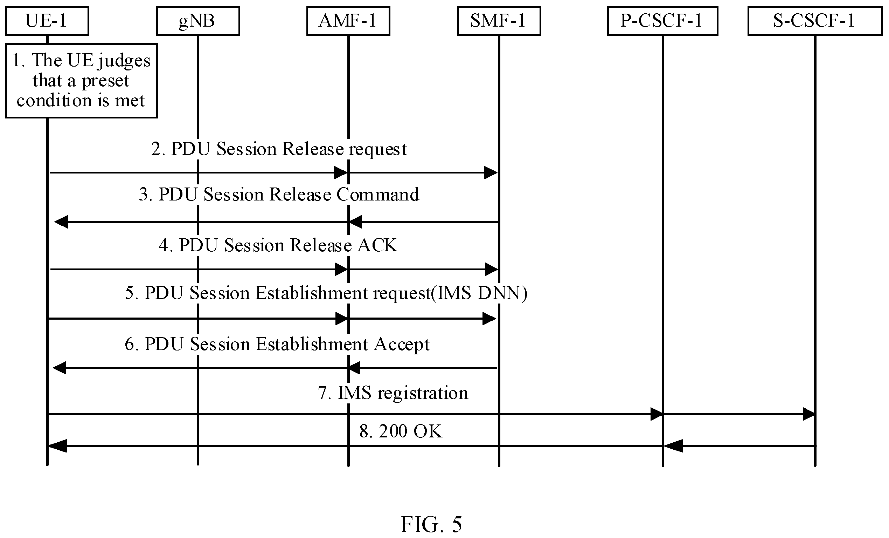

FIG. 4 is a schematic flowchart of a communication method according to an embodiment of this application. As shown in FIG. 5, a resource configuration method may include the following Step 201 to Step 202.

Step 201: After communication of a first multimedia subsystem (IP Multimedia Subsystem, IMS) service between a first UE and a second UE is finished, the first UE initiates a session release process in a case that a first condition is met.

In embodiments of this application, the session release process is used for releasing a first session.

In embodiments of this application, the IMS service includes at least one of the followings:
an IMS voice call service; and
an IMS video call service.

In embodiments of this application, the first session is used for transmitting the first IMS service, for example, transmitting the IMS service between the first UE and the second UE.

Exemplarily, the transmitting the first IMS service may be transmitting data and/or signaling of the IMS service.

Exemplarily, the first session includes at least one of the followings: a PDU session; and a packet data network (Packet Data Network, PDN) connection.

Step 202: After the above session release process is completed, the first UE initiates a session establishment process and an IMS registration process, and the session establishment process is used for establishing a second session.

In embodiments of this application, the second session is used for transmitting a second IMS service, for example, transmitting the IMS service between the first UE and the second UE or another UE.

Exemplarily, the session establishment process includes a session establishment request, the request includes information about an IMS data network name (Data Network Name, DNN), and the information is used for indicating establishment of a session used for transmitting the IMS service.

According to the communication method provided by embodiments of this application, after the communication of the first IMS service between the first UE and the second UE is finished, the first UE initiates the session release process in a case that the first condition is met, the session release process being used for releasing the first session, and the first session being used for transmitting the first IMS service; and initiates the session establishment process and the IMS registration process after the session release process is completed, the session establishment process being used for establishing the second session, and the second session being used for transmitting the second IMS service. Therefore, after the first UE and the second UE end the IMS service, the first session between the first UE and the second UE is released in a case that the first condition is met. Therefore, when the dedicated bearer corresponding to the IMS service is not successfully deleted, the first UE may successfully establish a new session and IMS registration in a next call.

Optionally, in embodiments of this application, the first condition includes at least one of the followings (i.e. the following 1) to 8)):
1) No session modification command is received after the first UE sends a first Bye (Bye) message.

Exemplarily, the first Bye message is used for ending the communication of the first IMS service between the first UE and the second UE.

Exemplarily, no session modification command is received in a first time period after the first UE sends the first Bye message.

Exemplarily, the first time period may be user-defined, or may be a system default preset time period.

2) No session modification command is received after the first UE receives a second Bye message sent by the second UE.

Exemplarily, the second Bye message is used for ending the communication of the first IMS service between the first UE and the second UE.

Exemplarily, no session modification command is received in a second time period after the first UE receives the second Bye message sent by the second UE.

Exemplarily, the second time period may be user-defined, or may be a system default preset time period.

Therefore, when the first UE does not receive the session modification command in the preset time period of ending the call, the session release may be directly performed, so that the first UE may successfully establish a new session.

3) After sending a session modification request, the first UE receives a reject message sent by a network side device, for example, an SMF.

Exemplarily, the reject message is used for rejecting the session modification. For example, the reject message may be a PDU session modification reject message.

Exemplarily, a cause value included in the reject message is a first value; and the first value is used for indicating a cause of rejecting the session modification request. Further optionally, the first value may include: 31: unspecified request reject (request reject, unspecified); and 84: syntactical error in the QoS operation (syntactical error in the QoS operation).

4) The first UE detects that the session modification command sent by the network side device is erroneous.

Exemplarily, the session modification command being erroneous may include the following: the first UE detects that the session modification command includes no QoS rule (rule) information corresponding to the dedicated bearer used for transmitting the IMS service in the first session.

By taking the voice service as an example, the UE detects that the session modification command only includes information of a dedicated QoS flow corresponding to the voice service and does not include information of a QoS rule corresponding to the voice service.

5) In a case that the first UE sends the IMS service request to a third UE, there is a dedicated bearer used for transmitting the IMS service.

Exemplarily, when the first UE determines that there is a data radio bearer (Data Radio Bearer, DRB) used for transmitting the IMS service, the dedicated bearer used for transmitting the IMS service is determined.

Exemplarily, when the first UE receives a radio resource control (Radio Resource Control, RRC) reconfiguration (Reconfiguration) message sent by a base station, it is determined that there is the DRB used for transmitting the IMS service according to the content of the RRC reconfiguration message. For example, judgment is performed according to the quantity of the DRB. When the quantity of the DRB corresponding to the first PDU session is one, it is determined that there is no dedicated bearer used for transmitting the IMS service. When the quantity of the DRBs corresponding to the first PDU session is more than or equal to two, it is determined that there is the dedicated bearer used for transmitting the IMS service.

Exemplarily, in a case that the first UE sends the IMS service request to the third UE, it may be understood as that the first UE prepares to or is about to send the IMS service request to the third UE.

6) In a case that the first UE receives an IMS service request sent by a fourth UE, there is the dedicated bearer used for transmitting the IMS service.

Exemplarily, when the first UE determines that there is the data radio bearer used for transmitting the IMS service, the dedicated bearer used for transmitting the IMS service is determined.

Exemplarily, the first UE may judge, at any time point after the communication of the IMS service between the first UE and the second UE is finished, whether there is a dedicated bearer used for transmitting the IMS service or not. For example, when the UE enters a connected mode from an idle mode, whether there is the DRB used for transmitting the IMS service or not is determined according to the content of the received RRC Reconfiguration message sent by the base station. For example, judgment is performed according to the quantity of the DRB.

Therefore, when the UE detects that before there is still the dedicated bearer used for transmitting the IMS service before the establishment of a new session, the session may be actively released, so that the UE may establish the new session.

7) After the first UE sends an IMS service request to a fifth UE, the first UE receives a response message used for indicating an error.

Exemplarily, the response message used for indicating the error is a first message, and the first message may be: a 503 message, or a 502 message, or a 504 message. Further, the first message may include information about insufficient bearer resources (insufficient bearer resource).

8) After the first UE receives an IMS service request sent by a sixth UE, the first UE receives a call cancel message.

Exemplarily, the call cancel (Cancel) message may be a message including an insufficient bearer resource (insufficient bearer resource).

Exemplarily, the session modification command is used for deleting the dedicated bearer used for transmitting the IMS service in the first session.

Exemplarily, the session modification request is used for deleting the dedicated bearer used for transmitting the IMS service in the first session.

Optionally, in embodiments of this application, the bearer includes at least one of the followings: a QoS flow, and an EPS bearer.

In an example, by aiming at 7) above, after the first UE sends the IMS service request to the fifth UE, the first UE receives the response message used for indicating the error and the session modification command.

Exemplarily, the session modification command is used for deleting the dedicated bearer used for transmitting the IMS service in the first session.

Optionally, in embodiments of this application, after the first UE sends the IMS service request to the fifth UE, a process that the first UE receives the response message used for indicating the error occurs for M times, and the M is a positive integer.

It should be noted that the first UE may send M call invite messages, and correspondingly, may also receive M response messages used for indicating an error.

In an example, by aiming at 8) above, after the first UE receives the IMS service request sent by the sixth UE, the first UE receives the call cancel message and the session modification command.

Exemplarily, the session modification command is used for deleting the dedicated bearer used for transmitting the IMS service in the first session.

Optionally, in embodiments of this application, after the first UE receives the IMS service request sent by the sixth UE, a process of receiving the call cancel message occurs for N times, and the N is a positive integer.

It should be noted that the first UE may send N call invite messages, and correspondingly, may also receive N call cancel messages.

It should be noted that the second UE to the sixth UE may be the same, or may be different.

Therefore, in a case that the dedicated bearer corresponding to the IMS service cannot be successfully deleted after the last call ends, a session release request may be sent to release the session of the last call ending, so as to further perform new session establishment and IMS registration.

The communication method provided in embodiments of this application will be described below by taking a call scenario between the UE1 and the UE2 as an example.

Exemplarily, as shown in FIG. 5, the communication method provided by embodiments of this application includes the following S1 to S8:
S1: The UE1 judges whether the following one or more conditions are met or not.

Specifically, the condition includes (1) to (8):
(1) When the UE1 is a called UE, the UE1 receives a cancel message after receiving the call invite (invite) message.
(2) When the UE1 is a calling UE, the UE1 receives a 503 message (i.e., the first message) after sending the Invite message.
(3) When a previous successfully established call ends, in a case that the UE2 hangs up the call, the UE1 does not receive a PDU session modification command used for deleting the dedicated bearer of the session after receiving the Bye message; or, in a case that the UE1 hangs up the call, the UE1 does not receive the PDU session modification command used for deleting the dedicated bearer of the session after sending the Bye message.
(4) The UE1 receives the PDU session modification command used for deleting the dedicated bearer of the session after receiving the cancel message.
(5) The UE1 receives the PDU session modification command used for deleting the dedicated bearer of the session after receiving the 503 message.
(6) When the UE1 actively initiates a PDU session modification request used for deleting the dedicated bearer of the session, the request is rejected, that is, the PDU session modification reject message is received.
(7) The UE1 judges that the received PDU session modification command used for deleting the dedicated bearer of the session has an error.
(8) When the UE judges to initiate or receive an Invite message, there is still the dedicated bearer corresponding to the IMS service.

S2 to S4: When determining that the condition is set, the UE1 initiates a PDU session request. The PDU session is used for transmitting signaling and data of the IMS.

S5 to S6: After the IMS PDU session release is completed, a PDU session establishment request is initiated again.

S7 to S8: The UE1 completes the IMS registration.

Therefore, the UE may actively initiate the session release request in a case that the condition is set, so that the session establishment request and the IMS registration request may be initiated again after the session release is completed.

According to the communication method provided by embodiments of this application, an executive subject may be voice communication. The communication method provided by embodiments of this application is illustrated in embodiments of this application by taking the communication method implementation through voice communication as an example.

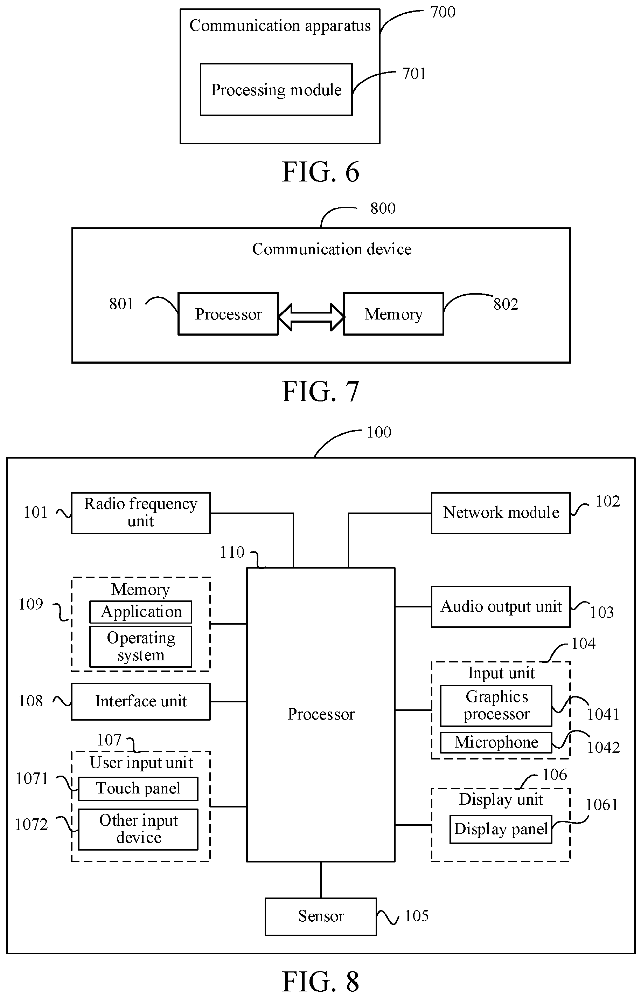

Embodiments of this application provide a communication apparatus 700. As shown in FIG. 6, the communication device 700 includes: a processing module 701. The processing module 701 is configured to initiate a session release process after communication of a first IMS service between a first UE and a second UE is finished in a case that a first condition is met, the session release process is used for releasing a first session, and the first session is used for transmitting the first IMS service. The processing module 701 is further configured to initiate a session establishment process and an IMS registration process after the session release process is completed, the session establishment process is used for establishing a second session, and the second session is used for transmitting a second IMS service.

Optionally, in embodiments of this application, the first condition includes at least one of the followings:
no session modification command is received after the first UE sends a first Bye message, and the first Bye message is used for ending the communication of the first IMS service between the first UE and the second UE;
no session modification command is received after the first UE receives a second Bye message sent by the second UE, and the second Bye message is used for ending the communication of the first IMS service between the first UE and the second UE;
a reject message sent by a network side device is received after the first UE sends a session modification request, and the reject message is used for rejecting session modification;
the first UE detects that the session modification command sent by the network side device is erroneous;
in a case that the first UE sends the IMS service request to a third UE, there is a dedicated bearer used for transmitting the IMS service;
in a case that the first UE receives an IMS service request sent by a fourth UE, there is the dedicated bearer used for transmitting the IMS service;
after the first UE sends the IMS service request to a fifth UE, the first UE receives a response message used for indicating an error; and
after the first UE receives an IMS service request sent by a sixth UE, the first UE receives a call cancel message.

The session modification command is used for deleting the dedicated bearer used for transmitting the IMS service in the first session. The session modification request is used for deleting the dedicated bearer used for transmitting the IMS service in the first session.

Optionally, in embodiments of this application, the condition that no session modification command is received after the first UE sends a first Bye message includes the following: no session modification command is received in a first time period after the first UE sends the first Bye message.

Optionally, in embodiments of this application, the condition that no session modification command is received after the first UE receives the second Bye message sent by the second UE includes the following: no session modification command is received in a second time period after the first UE receives the second Bye message sent by the second UE.

Optionally, in embodiments of this application, a cause value included in the reject message is a first value, and the first value is used for indicating a cause of rejecting the session modification request.

Optionally, in embodiments of this application, the condition that the first UE detects that the session modification command sent by the network side device is erroneous includes the following: the first UE detects that the session modification command includes no QoS rule information corresponding to the dedicated bearer used for transmitting the IMS service in the first session.

Optionally, in embodiments of this application, the condition that there is a dedicated bearer used for transmitting the IMS service includes the following: there is a data radio bearer used for transmitting the IMS service.

Optionally, in embodiments of this application, the response message used for indicating the error is a first message, and the first message includes information about insufficient bearer resources.

Optionally, in embodiments of this application, the condition that after the first UE sends the IMS service request to a fifth UE, the first UE receives a response message used for indicating an error includes the following: after the first UE sends the IMS service request to the fifth UE, the first UE receives the response message used for indicating the error and the session modification command, and the session modification command is used for deleting the dedicated bearer used for transmitting the IMS service in the first session.

Optionally, in embodiments of this application, the condition that after the first UE sends the IMS service request to a fifth UE, the first UE receives a response message used for indicating an error further includes the following: after the first UE sends the IMS service request to the fifth UE, a process that the first UE receives the response message used for indicating the error occurs for M times, and the M is a positive integer.

Optionally, in embodiments of this application, the condition that after the first UE receives an IMS service request sent by a sixth UE, the first UE receives a call cancel message further includes the following: after the first UE receives the IMS service request sent by the sixth UE, the first UE receives the call cancel message and the session modification command, and the session modification command is used for deleting the dedicated bearer used for transmitting the IMS service in the first session.

Optionally, in embodiments of this application, the condition that after the first UE receives an IMS service request sent by a sixth UE, the first UE receives a call cancel message further includes the following: after the first UE receives the IMS service request sent by the sixth UE, a process of receiving the call cancel message occurs for N times, and the N is a positive integer.

According to the communication method provided by embodiments of this application, after the communication of the first IMS service between the first UE and the second UE is finished, the first UE initiates the session release process in a case that the first condition is met, the session release process being used for releasing the first session, and the first session being used for transmitting the first IMS service; and initiates the session establishment process and the IMS registration process after the session release process is completed, the session establishment process being used for establishing the second session, and the second session being used for transmitting the second IMS service. Therefore, after the first UE and the second UE end the IMS service, the first session between the first UE and the second UE is released in a case that the first condition is met. Therefore, when the dedicated bearer corresponding to the IMS service is not successfully deleted, the first UE may successfully establish a new session and IMS registration in a next call.

The communication device in embodiments of this application may be an electronic device, for example, an electronic device with an operating system, or may be a component in an electronic device, for example, an integrated circuit or a chip. The electronic device may be a terminal, or may be another device other than a terminal. Exemplarily, the terminal may include, but is not limited to types of the terminal 11 listed above. Another device may be a server, a network attached storage (Network Attached Storage, NAS), etc. This is not specifically limited in embodiments of this application.

Through the communication method provided by embodiments of this application, each process implemented by the method embodiments shown in FIG. 4 may be performed, and the same technical effects may be achieved. To avoid repetition, details are not described herein again.

Optionally, as shown in FIG. 7, embodiments of this application further provide a communication device 800, including a processor 801 and a memory 802. The memory 802 stores a program or an instruction capable of running on the processor 801. For example, in a case that the communication device 800 is a terminal, each step of the communication method embodiments may be performed when the program or the instruction is executed by the processor 801, and the same technical effect may be achieved. In a case that the communication device 800 is a network side device, each step of the embodiments of the communication method is implemented when the program or the instruction is executed by the processor 801, and the same technical effect may be achieved. To avoid repetition, details are not repeated herein.

Embodiments of this application further provide a terminal, including a processor and a communication interface. The communication interface is configured to initiate a session release process, and initiate a session establishment process and an IMS registration process after the session release process is completed. The terminal embodiment corresponds to the terminal side method embodiment. Each implementation process and each implementation of the method embodiments may be applied to the terminal embodiments and the same technical effect may be achieved.

Specifically, FIG. 8 is a schematic diagram of a hardware structure of a UE according to embodiments of this application.

The UE is the first UE. The first UE100 includes, but is not limited to: at least some components of a radio frequency unit 101, a network module 102, an audio output unit 103, an input unit 104, a sensor 105, a display unit 106, a user input unit 107, an interface unit 108, a memory 109, a processor 110, etc.

A person skilled in the art may understand that the first UE100 may further include a power supply (for example, a battery) for supplying electricity to each component. The power supply may be logically connected to the processor 110 by a power management system to implement managing functions such as charging, discharging, and power consumption management through the power management system. The structure of the terminal shown in FIG. 8 does not constitute any limitation to the terminal, and the terminal may include more or fewer components than a structure shown in the figures, or may combine some components, or have different component arrangements. Details are not described herein again.

It should be understood that in embodiments of this application, the input unit 104 may include a graphics processing unit (Graphics Processing Unit, GPU) 1041 and a microphone 1042. The graphics processor 1041 processes image data of a still picture or video acquired by an image capture apparatus (for example, a camera) in a video capture mode or an image capture mode. The display unit 106 may include a display panel 1061. The display panel 1061 may be configured by using a liquid crystal display, an organic light-emitting diode, etc. The user input unit 107 includes at least one of a touch panel 1071 and another input device 1072. The touch panel 1071 is also referred to as a touchscreen. The touch panel 1071 may include two parts: a touch detection apparatus and a touch controller. Another input device 1072 may include, but is not limited to a physical keyboard, a functional key (such as a volume control key or a switch key), a track ball, a mouse, and a joystick. Details are not described herein again.

In embodiments of this application, after receiving downlink data from the network side device, the radio frequency unit 101 may transmit the downlink data to the processor 110 for processing. In addition, the radio frequency unit 101 may send uplink data to the network side device. Generally, the radio frequency unit 101 includes, but is not limited to an antenna, an amplifier, a transceiver, a coupler, a low-noise amplifier, a duplexer, etc.

The memory 109 may be configured to store a software program or an instruction and various data. The memory 109 may mainly include a first storage area for storing the program or the instruction and a second storage area for storing data. The first storage area may store the operating system, an application or instruction (for example, a voice playing function, an image playing function) required for at least one function, etc. Moreover, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 109 in embodiments of this application includes, but is not limited to these memories and any other memories of suitable types.

The processor 110 may include one or more processing units. Optionally, the processor 110 may integrate an application processor and a modem processor. The application processor mainly processes operations about an operating system, a user interface, an application program, etc. The modem processor mainly processes a wireless communication signal, and is, for example, a baseband processor. It may be understood that the modem processor may not be integrated into the processor 110.

The processor 110 is included. The processor 110 is configured to initiate a session release process after communication of a first IMS service between a first UE and a second UE is finished in a case that a first condition is met, the session release process is used for releasing a first session, and the first session is used for transmitting the first IMS service. The processor 110 is further configured to initiate a session establishment process and an IMS registration process after the session release process is completed, the session establishment process is used for establishing a second session, and the second session is used for transmitting a second IMS service.

Optionally, in embodiments of this application, the first condition includes at least one of the followings:
no session modification command is received after the first UE sends a first Bye message, and the first Bye message is used for ending the communication of the first IMS service between the first UE and the second UE;
no session modification command is received after the first UE receives a second Bye message sent by the second UE, and the second Bye message is used for ending the communication of the first IMS service between the first UE and the second UE;
a reject message sent by a network side device is received after the first UE sends a session modification request, and the reject message is used for rejecting session modification;
the first UE detects that the session modification command sent by the network side device is erroneous;
in a case that the first UE sends the IMS service request to a third UE, there is a dedicated bearer used for transmitting the IMS service;
in a case that the first UE receives an IMS service request sent by a fourth UE, there is the dedicated bearer used for transmitting the IMS service;
after the first UE sends the IMS service request to a fifth UE, the first UE receives a response message used for indicating an error; and
after the first UE receives an IMS service request sent by a sixth UE, the first UE receives a call cancel message.

The session modification command is used for deleting the dedicated bearer used for transmitting the IMS service in the first session. The session modification request is used for deleting the dedicated bearer used for transmitting the IMS service in the first session.

Optionally, in embodiments of this application, the condition that no session modification command is received after the first UE sends a first Bye message includes the following: no session modification command is received in a first time period after the first UE sends the first Bye message.

Optionally, in embodiments of this application, the condition that no session modification command is received after the first UE receives the second Bye message sent by the second UE includes the following: no session modification command is received in a second time period after the first UE receives the second Bye message sent by the second UE.

Optionally, in embodiments of this application, a cause value included in the reject message is a first value; and the first value is used for indicating a cause of rejecting the session modification request.

Optionally, in embodiments of this application, the condition that the first UE detects that the session modification command sent by the network side device is erroneous includes the following: the first UE detects that the session modification command includes no QoS rule information corresponding to the dedicated bearer used for transmitting the IMS service in the first session.

Optionally, in embodiments of this application, the condition that there is a dedicated bearer used for transmitting the IMS service includes the following: there is a data radio bearer used for transmitting the IMS service.

Optionally, in embodiments of this application, the response message used for indicating the error is a first message, and the first message includes information about insufficient bearer resources.

Optionally, in embodiments of this application, the condition that after the first UE sends the IMS service request to a fifth UE, the first UE receives a response message used for indicating an error includes the following: after the first UE sends the IMS service request to the fifth UE, the first UE receives the response message used for indicating the error and the session modification command, and the session modification command is used for deleting the dedicated bearer used for transmitting the IMS service in the first session.

Optionally, in embodiments of this application, the condition that after the first UE sends the IMS service request to the fifth UE, the first UE receives the response message used for indicating the error further includes the following: after the first UE sends the IMS service request to the fifth UE, a process that the first UE receives the response message used for indicating the error occurs for M times, and the M is a positive integer.

Optionally, in embodiments of this application, the condition that after the first UE receives an IMS service request sent by a sixth UE, the first UE receives a call cancel message further includes the following: after the first UE receives the IMS service request sent by the sixth UE, the first UE receives the call cancel message and the session modification command, and the session modification command is used for deleting the dedicated bearer used for transmitting the IMS service in the first session.

Optionally, in embodiments of this application, the condition that after the first UE receives an IMS service request sent by a sixth UE, the first UE receives a call cancel message further includes the following: after the first UE receives the IMS service request sent by the sixth UE, a process of receiving the call cancel message occurs for N times, and the N is a positive integer.

According to the electronic device provided by embodiments of this application, after communication of the first IMS service between the first UE and the second UE is finished, the first UE initiates the session release process in a case that the first condition is met, the session release process being used for releasing the first session, and the first session being used for transmitting the first IMS service; and initiates the session establishment process and the IMS registration process after the session release process is completed, the session establishment process being used for establishing the second session, and the second session being used for transmitting the second IMS service. Therefore, after the first UE and the second UE end the IMS service, the first session between the first UE and the second UE is released in a case that the first condition is met. Therefore, when the dedicated bearer corresponding to the IMS service is not successfully deleted, the first UE may successfully establish a new session and IMS registration in a next call.

Embodiments of this application further provide a readable storage medium. The readable storage medium stores a program or an instruction. When the program or the instruction is executed by a processor, each process of the foregoing embodiment of the communication method is performed, and the same technical effects may be achieved. To avoid repetition, details are not described herein again.

The processor may be a processor in the terminal in above embodiments. The readable storage medium includes a computer-readable storage medium, such as a computer read-only memory (ROM), a random access memory (RAM), a magnetic disc, an optical disc, etc.

Embodiments of this application further provide a chip. The chip includes a processor and a communication interface, the communication interface is coupled to the processor, and the processor is configured to run a program or an instruction to implement each process of the above embodiments of the communication method, and the same technical effects may be achieved. To avoid repetition, details are not described herein again.

It should be understood that the chip mentioned in embodiments of this application may also be referred to as a system on chip, a system chip, a chip system, a system-on-a-chip, etc.

Embodiments of this application further provide a computer program/program product, the computer program/program product is stored in a storage medium, and the computer program/program product is executed by at least one processor to implement each process of the above embodiments of the communication method, and the same technical effects may be achieved. To avoid repetition, details are not described herein again.

Embodiments of this application further provide a communication system, including: a terminal and a network side device. The terminal may be configured to execute the steps of the communication method.

It should be noted that terms "include", "comprise", or any other variation thereof herein are intended to cover a non-exclusive inclusion, so that a process, a method, an object, or an apparatus including a series of elements not only includes those elements but also includes other elements that are not clearly listed or further includes intrinsic elements of the process, the method, the object, or the apparatus. Without more limitations, an element defined by a sentence "including one" does not exclude a case that there are still other same elements in the process, method, article, or apparatus including the element. In addition, it should be pointed out that the range of the method and apparatus in the implementation of this application is not limited to execution of functions in a shown or discussed order, and may further include execution of functions involved in a substantially simultaneous manner or in a reverse order. For example, the described method may be executed in an order different from the described order, and various steps may be added, omitted, or combined. Moreover, features described with the reference to some examples may be combined in other examples.

Through the above descriptions on the implementations, those skilled in the art may clearly know that each embodiment method may be realized with the help of software and a necessary universal hardware platform, and of course may be realized through a hardware. But in many cases the former is a preferable implementation. Based on such understanding, the technical solutions of this application essentially, or a part contributing to the prior art, may be presented in a form of a computer software product. The computer software product is stored in a storage medium (for example, an ROM/RAM, a magnetic disk, or an optical disc) including several instructions to enable a terminal (which may be a mobile phone, a computer, a server, an air conditioner, a network device, etc.) to perform the methods described in the embodiments of this application.

The embodiments of this application are described above with the reference to the accompanying drawings, but this application is not limited to the above specific implementations. The above specific implementations are merely illustrative rather than restrictive. Inspired by this application, those of ordinary skill in the art may still make multiple forms without departing from the essence of this application and the protection scope of the claims, and these forms all fall within the protection of this application.

## Claims

1. A communication method, comprising:
after communication of a first multimedia subsystem (IMS) service between a first user equipment (UE) and a second UE is finished, initiating a session release process by the first UE in a case that a first condition is met, the session release process being used for releasing a first session, and the first session being used for transmitting the first IMS service; and
initiating a session establishment process and an IMS registration process after the session release process is completed, the session establishment process being used for establishing a second session, and the second session being used for transmitting a second IMS service.

2. The method according to claim 1, wherein the first condition comprises at least one of the followings:
no session modification command is received after the first UE sends a first Bye message, and the first Bye message is used for ending the communication of the first IMS service between the first UE and the second UE;
no session modification command is received after the first UE receives a second Bye message sent by the second UE, and the second Bye message is used for ending the communication of the first IMS service between the first UE and the second UE;
a reject message sent by a network side device is received after the first UE sends a session modification request, and the reject message is used for rejecting session modification;
the first UE detects that the session modification command sent by the network side device is erroneous;
in a case that the first UE sends an IMS service request to a third UE, there is a dedicated bearer used for transmitting the IMS service;
in a case that the first UE receives an IMS service request sent by a fourth UE, there is a dedicated bearer used for transmitting the IMS service;
after the first UE sends an IMS service request to a fifth UE, the first UE receives a response message used for indicating an error; and
after the first UE receives an IMS service request sent by a sixth UE, the first UE receives a call cancel message,
wherein the session modification command is used for deleting the dedicated bearer used for transmitting the IMS service in the first session; and
the session modification request is used for deleting the dedicated bearer used for transmitting the IMS service in the first session.

3. The method according to claim 2, wherein the condition that no session modification command is received after the first UE sends a first Bye message comprises the following:
no session modification command is received in a first time period after the first UE sends the first Bye message.

4. The method according to claim 2, wherein the condition that no session modification command is received after the first UE receives a second Bye message sent by the second UE comprises the following:
no session modification command is received in a second time period after the first UE receives the second Bye message sent by the second UE.

5. The method according to claim 2, wherein a cause value comprised in the reject message is a first value; and the first value is used for indicating a cause of rejecting the session modification request.

6. The method according to claim 2, wherein the condition that the first UE detects that the session modification command sent by the network side device is erroneous comprises the following:
the first UE detects that the session modification command comprises no quality of service (QoS) rule information corresponding to the dedicated bearer used for transmitting the IMS service in the first session.

7. The method according to claim 2, wherein the condition that there is a dedicated bearer used for transmitting the IMS service comprises the following:
there is a data radio bearer used for transmitting the IMS service.

8. The method according to claim 2, wherein the response message used for indicating an error is a first message, and the first message comprises information indicating insufficient bearer resources.

9. The method according to claim 2, wherein the condition that after the first UE sends an IMS service request to a fifth UE, the first UE receives a response message used for indicating an error comprises the following:
after the first UE sends the IMS service request to the fifth UE, the first UE receives the response message used for indicating the error and the session modification command, and the session modification command is used for deleting the dedicated bearer used for transmitting the IMS service in the first session.

10. The method according to claim 2, wherein the condition that after the first UE sends an IMS service request to a fifth UE, the first UE receives a response message used for indicating an error further comprises the following:
after the first UE sends the IMS service request to the fifth UE, a process that the first UE receives the response message used for indicating the error occurs for M times, and the M is a positive integer.

11. The method according to claim 2, wherein the condition that after the first UE receives an IMS service request sent by a sixth UE, the first UE receives a call cancel message further comprises the following:
after the first UE receives the IMS service request sent by the sixth UE, the first UE receives the call cancel message and the session modification command, and the session modification command is used for deleting the dedicated bearer used for transmitting the IMS service in the first session.

12. The method according to claim 2, wherein the condition that after the first UE receives an IMS service request sent by a sixth UE, the first UE receives a call cancel message further comprises the following:
after the first UE receives the IMS service request sent by the sixth UE, a process of receiving the call cancel message occurs for N times, and the N is a positive integer.

13. The method according to any one of claims 1 to 12, wherein the IMS service comprises at least one of the followings:
an IMS voice call service; and
an IMS video call service.

14. The method according to any one of claims 1 to 12, wherein the first session comprises at least one of the followings:
a protocol data unit (PDU) session, and
a packet data network (PDN) connection; and
the bearer comprises at least one of the followings:
a QoS flow, and
an evolved packet system (EPS) bearer.

15. A voice communication apparatus, comprising: a processing module, wherein
the processing module is configured to initiate a session release process after communication of a first IMS service between a first UE and a second UE is finished in a case that a first condition is met, the session release process is used for releasing a first session, and the first session is used for transmitting the first IMS service; and
the processing module is further configured to initiate a session establishment process and an IMS registration process after the session release process is completed, the session establishment process is used for establishing a second session, and the second session is used for transmitting a second IMS service.

16. The apparatus according to claim 15, wherein the first condition comprises at least one of the followings:
no session modification command is received after the first UE sends a first Bye message, and the first Bye message is used for ending the communication of the first IMS service between the first UE and the second UE;
no session modification command is received after the first UE receives a second Bye message sent by the second UE, and the second Bye message is used for ending the communication of the first IMS service between the first UE and the second UE;
a reject message sent by a network side device is received after the first UE sends a session modification request, and the reject message is used for rejecting session modification;
the first UE detects that the session modification command sent by the network side device is erroneous;
in a case that the first UE sends an IMS service request to a third UE, there is a dedicated bearer used for transmitting the IMS service;
in a case that the first UE receives an IMS service request sent by a fourth UE, there is a dedicated bearer used for transmitting the IMS service;
after the first UE sends an IMS service request to a fifth UE, the first UE receives a response message used for indicating an error; and
after the first UE receives an IMS service request sent by a sixth UE, the first UE receives a call cancel message,
wherein the session modification command is used for deleting the dedicated bearer used for transmitting the IMS service in the first session; and
the session modification request is used for deleting the dedicated bearer used for transmitting the IMS service in the first session.

17. The apparatus according to claim 16, wherein the condition that no session modification command is received after the first UE sends a first Bye message comprises the following:
no session modification command is received in a first time period after the first UE sends the first Bye message.

18. The apparatus according to claim 16, wherein the condition that no session modification command is received after the first UE receives a second Bye message sent by the second UE comprises the following:
no session modification command is received in a second time period after the first UE receives the second Bye message sent by the second UE.

19. The apparatus according to claim 16, wherein a cause value comprised in the reject message is a first value; and the first value is used for indicating a cause of rejecting the session modification request.

20. The apparatus according to claim 16, wherein the condition that the first UE detects that the session modification command sent by the network side device is erroneous comprises the following:
the first UE detects that the session modification command comprises no QoS rule information corresponding to the dedicated bearer used for transmitting the IMS service in the first session.

21. The apparatus according to claim 16, wherein the condition that there is a dedicated bearer used for transmitting the IMS service comprises the following:
there is a data radio bearer used for transmitting the IMS service.

22. The apparatus according to claim 16, wherein the response message used for indicating an error is a first message, and the first message comprises information about insufficient bearer resources.

23. The apparatus according to claim 16, wherein the condition that after the first UE sends an IMS service request to a fifth UE, the first UE receives a response message used for indicating an error comprises the following:
after the first UE sends the IMS service request to the fifth UE, the first UE receives the response message used for indicating the error and the session modification command, and the session modification command is used for deleting the dedicated bearer used for transmitting the IMS service in the first session.

24. The apparatus according to claim 16, wherein the condition that after the first UE sends an IMS service request to a fifth UE, the first UE receives a response message used for indicating an error further comprises the following:
after the first UE sends the IMS service request to the fifth UE, a process that the first UE receives the response message used for indicating the error occurs for M times, and the M is a positive integer.

25. The apparatus according to claim 16, wherein the condition that after the first UE receives an IMS service request sent by a sixth UE, the first UE receives a call cancel message further comprises the following:
after the first UE receives the IMS service request sent by the sixth UE, the first UE receives the call cancel message and the session modification command, and the session modification command is used for deleting the dedicated bearer used for transmitting the IMS service in the first session.

26. The apparatus according to claim 16, wherein the condition that after the first UE receives an IMS service request sent by a sixth UE, the first UE receives a call cancel message further comprises the following:
after the first UE receives the IMS service request sent by the sixth UE, a process of receiving the call cancel message occurs for N times, and the N is a positive integer.

27. The apparatus according to any one of claims 15 to 26, wherein
the IMS service comprises at least one of the followings:
an IMS voice call service; and
an IMS video call service.

28. The apparatus according to any one of claims 15 to 26, wherein the first session comprises at least one of the followings:
a PDU session, and
a PDN connection; and
the bearer comprises at least one of the followings:
a QoS flow, and
an EPS bearer.

29. A user equipment (UE), being a first UE and comprising a processor and a memory, wherein the memory stores a program or instruction capable of running on the processor, and the program or instruction is executed by the processor to implement the steps of the communication method according to any one of claims 1 to 14.

30. A readable storage medium, storing a program or an instruction executed by a processor to implement the steps of the communication method according to any one of claims 1 to 14.

31. A chip, comprising a processor and a communication interface, wherein the communication interface is coupled to the processor, and the processor is configured to run a program or an instruction to implement the steps of the communication method according to any one of claims 1 to 14.
